Europäisches Patentamt

European Patent Office

Office européen des brevets

(11) Numéro de publication: **0 432 077 A1**

# (12) DEMANDE DE BREVET EUROPEEN

(21) Numéro de dépôt: 90480205.5

(22) Date de dépôt: **07.12.90**

(51) Int. Cl.⁵: **G01C 5/04**

(30) Priorité: **07.12.89 FR 8916437**

(43) Date de publication de la demande:
**12.06.91 Bulletin 91/24**

(84) Etats contractants désignés:
**CH DE ES GB IT LI**

(71) Demandeur: **Barbessol, André**
**Le Fenouillède, 306, chemin du Cassivet**
**F-83720 Trans en Provence(FR)**

(72) Inventeur: **Barbessol, André**
**Le Fenouillède, 306, chemin du Cassivet**
**F-83720 Trans en Provence(FR)**

(74) Mandataire: **Hautier, Jean-Louis**
**Cabinet Hautier Office Méditerranéen de**
**Brevets d'Invention et de Marques 24 rue**
**Masséna**
**F-06000 Nice(FR)**

(54) **Dispositif électronique ou non pour caler, tracer, contrôler le niveau ou un faux niveau déterminé.**

(57) Il est du type comportant au moins deux cellules (19), comportant chacune une chambre (14), reliées ensemble par un conduit rigide ou souple (12), le tout rempli de liquide (13) rendu prisonnier par deux membranes particulières souples. Les deux membranes (5) sont surmontées chacune d'un index (7) et chaque index (7) est associé à un détecteur d'intensité lumineuse (6, 8) pour analyser la position dudit index (7). Ledit dispositif est pourvu :
-   d'un comparateur électronique (20) des informations données par les détecteurs (6 et 8),
-   d'une signalisation visuelle (22) et, éventuellement sonore de la position relative des chambres (14).

Le dispositif selon l'invention est destiné à tous travaux faisant référence à l'horizontale sur moyenne distance.

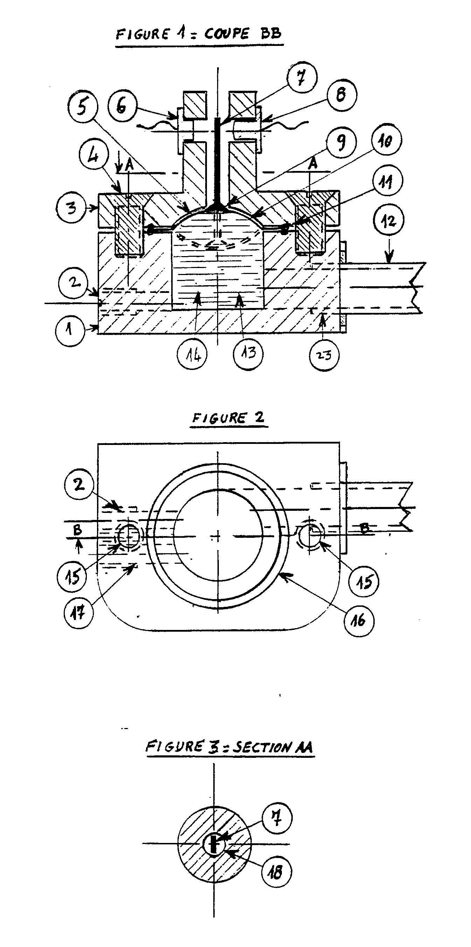

FIGURE 1 = COUPE BB

EP 0 432 077 A1

**"DISPOSITIF ÉLECTRONIQUE OU NON POUR CALER, TRACER, CONTRÔLER LE NIVEAU OU UN FAUX NIVEAU DÉTERMINÉ."**

La présente invention concerne un dispositif électronique ou nom de contrôle du niveau et concerne :

- Tous les travaux faisant appel à l'usage du niveau à bulle traditionnel ou référence au niveau : calage, tracé, etc.
- Toutes les détections de variation du niveau de solide ou liquide par rapport à un niveau de référence.

Ce dispositif peut être associé à d'autres organes (alarmes, ouverture ou fermeture asservie d'une vanne, vérins, télécommande, etc).

L'état de la technique peut être défini par les brevets suivants :

- US-A-4,379,367 : Dispositif permettant de comparer le niveau de deux points éloignés, pour trouver lequel est le plus haut ou le plus bas, et aussi de mesurer la différence de niveau entre ces deux points. L'appareil se compose de deux chambres qui communiquent entre elles grâce à un conduit flexible. Le conduit et la partie basse de chaque chambre sont remplis de liquide, de préférence par du mercure, dont le niveau dans chaque chambre varie suivant l'élévation des chambres l'une par rapport à l'autre. Un circuit électrique interconnecte les chambres, et le circuit est ouvert ou fermé. Le courant varie progressivement en fonction de l'élévation des chambres. Différents accessoires sont ajoutés pour faire fonctionner le système, contacts O/F, condensateur variable, résistance variable coulissante et une jauge de pression à résistance variable. Un index dans chaque chambre se déplace avec le liquide dans la chambre pour actionner le circuit électrique.

Dans ce brevet les membranes sont couplées par contact avec des dispositifs lumineux électriques.

- FR-A-2.622.690 : La présente invention concerne un système de controle et de réglage automatique du volume d'un fluide contenu dans des appareils dits à vases communiquants, qu'ils soient fermés ou ouverts et comportant divers systèmes électriques ainsi que des systèmes de tarage du liquide. Dans ce type de niveau, lorsque l'appareil contient un volume apparent trop important du liquide, ou un manque apparent de ce même liquide, deux signaux s'illuminent ou s'éteignent simultanément. Un système de tarage du volume apporte une correction. Le but de l'invention consiste à utiliser les couples de voyants illuminés ou éteints pour piloter après traitements de leurs courants un moteur électrique et son réducteur agissant à l'aide d'une vis sur le piston dans son cylindre afin d'absorber ou d'envoyer du liquide dans le circuit.

Ce brevet décrit essentiellement un système de tarage électrique automatique.

- FR-A-2.280.881 : Dispositif de niveau de précision par pression partant d'éléments simplifiés avec un opérateur unique et sur de grandes distances permettant d'effectuer des mesures précises à lecture directe facilitant les contrôles de niveau de construction, de terrassement, et topographiques, formé par trois capacités communicantes se caractérisant par le fait que le niveau témoin fixe obturé par une membrane souple est relié à un niveau mesureur mobile par un conduit rempli de fluide sans air, également obturé par une membrane souple attenante à une troisième capacité de lecture, étanche contenant un fluide et un volume d'air déterminé, encore obturée par une membrane souple.

Compte-tenu de la diversité d'emploi, il ne sera fait mention, dans la description, que de l'intégration du dispositif dans une règle-niveau de maçon.

Actuellement, pour caler, tirer le niveau sur des longueurs au-delà de 2 mètres, il est utilisé :

- Soit une règle et un niveau traditionnel : la précision obtenue est aléatoire suite
  - à la petite longueur du témoin
  - à son calage dans le niveau
  - à l'appréciation de lecture
  - à l'irrégularité du contact règle-niveau : état de ces derniers, présence éventuelle de graviers, salissures, etc.
- Soit à un niveau à eau (tubes reliés par un tuyau de caoutchouc): une bonne précision est obtenue, mais ce dispositif est peu pratique pour un calage du sol. De plus, souvent le liquide déborde car il est difficile de mettre, à distance, au premier coup, les deux tubes à une hauteur voisine.

Le dispositif selon l'invention permet de pallier ces divers inconvénients.

Il comporte :

- Deux chambres reliées par un conduit rigide ou souple, le tout rempli de liquide rendu prisonnier par deux membranes souples surmontées d'un index ;
- un détecteur de position pour chaque index. Dans l'exemple présenté, ce détecteur est une photo cellule électrique permettant d'analyser l'intensité lumineuse, mais tout détecteur de modification d'état pourrait être utilisé : pression, résistivité, champ magnétique, ou par un micro-contact, etc.
- un comparateur électronique des informations données par les détecteurs
- une signalisation visuelle et éventuellement, sonore de la position relative des chambres
- sur au moins l'une des chambres, deux orifices destinés :
- l'un au remplissage du liquide
- l'autre pour laisser l'air s'échapper lors de cette opération.

PARTICULARITES
- Pour permettre à la membrane de résister aux pressions :

- elle vient s'appuyer sur une voûte cintrée, sans arête ni aspérité
- elle comporte un renforcement au pied de l'index : celui-ci prend appui sur le bord de l'évent de la voûte.
- L'index est guidé verticalement : sa forme et ses dimensions sont telles que l'air peut entrer ou sortir librement de la voûte.

AUTRE MODE DE REALISATION

Dans les applications où il y a risque de variation des volumes contenu et contenant (déformation du conduit, dilatations différentes des volumes suite à des changements de température, etc) il serait adjoint un système de compensation.

Les dessins ci-joints sont donnés à titre d'exemples indicatifs et non limitatifs. Ils représentent un mode de réalisation préféré selon l'invention. Ils permettront de comprendre aisément l'invention.

La figure 1 représente, en coupe la chambre comportant les orifices de remplissage.

La figure 2 représente la vue de dessus du corps bas de la chambre.

La figure 3 représente une forme possible du guide et de l'index.

La figure 4 représente l'une des possibilités d'insertion du dispositif dans une règle.

Le dispositif présenté comporte :
- Vues de l'extérieur deux cellules (19) contenant deux chambres (14) : la figure 1 représente la coupe de la chambre comportant les orifices (2 et 17) utilisés lors du remplissage du liquide
- Un conduit (12) reliant ces deux chambres (14)
- Un système d'analyse de position de l'index (7) : photo cellule électrique (6 et 8) dans le modèle présenté
- Un comparateur électronique (20) de l'intensité lumineuse relevée par les photos cellules électriques (6 et 8)
- Une signalisation visuelle (22) et/ou sonore de la position relative des deux cellules (19)
- Un liquide (13)
Chaque cellule (19) comprend :
- un corps bas (1) comportant :
  * une chambre intérieure (14) de forme cylindrique dans le modèle exposé mais qui peut être de toute autre forme
  * un logement (23) pour raccordement du conduit (12)
  * une cannelure (16) pour recevoir la partie joint torique de la membrane
  * au moins deux trous (15) destinés à la fixation du corps haut (3) de la chambre.
- un corps haut (3) de même forme que le corps bas (1) comportant :
  * la voûte de la chambre intérieure (14)
  * le logement des vis de fixation et de serrage (4)
  * le guide de l'index (18) qui sert également de support aux détecteurs (6 et 8).
- une membrane (5) comportant :
  * un bord renforcé (11) faisant joint sans forme torique dans le modèle présenté en figure 1.

VARIANTE

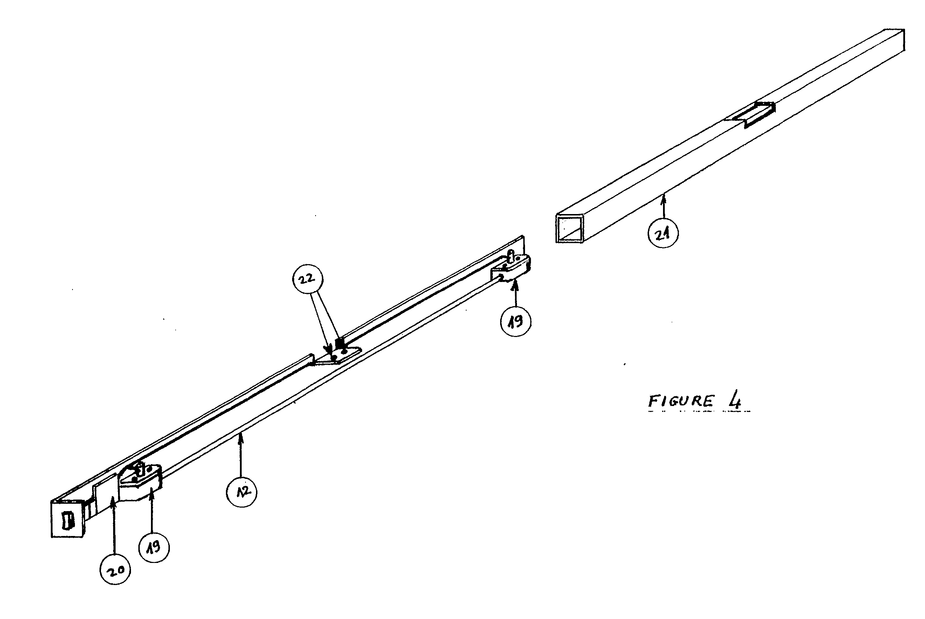

Ce bord peut être plat, dans ce cas la cannelure (16) ne se justifie plus
  * une partie fine et souple (10)
  * un renforcement (9) solidaire de l'index (7).
L'une des cellules (19) comporte :
- un orifice (2) destiné au remplissage du liquide (13)
- un autre (17), pour laisser échapper l'air prisonnier lors de cette opération.
Le conduit (12) peut être :
- souple ou rigide
- relié aux chambres intérieures (14) sur leurs côtés ou par le dessous.
La signalisation visuelle (22) est faite par deux diodes électroluminescentes,
- la diode éclairée donne la position haute, dans le cas retenu,
- l'extinction des deux diodes se fera lorsque les deux chambres seront de niveau.
Il pourrait être adjoint une signalisation sonore (buzzer): son arrêt signifiant la mise à niveau.
Le liquide (13) sera très fluide et, selon les conditions d'utilisation, antigel.
Ce dispositif sera intégré dans la règle (21)
- soit directement
- soit ajouté comme ensemble distinct (modèle présenté en figure 4).

VARIANTE :

Un modèle peut être conçu sans électronique. Dans ce cas, l'index sera visible et se déplacera devant une échelle.

FONCTIONNEMENT
- alimenter le circuit
- positionner la règle (21) : le liquide se déplace vers le point bas.

   * L'index (7) de ce point monte et obture la photo cellule électrique (6 et 8) alors que l'index (7) du point haut fait l'inverse.
   * Le comparateur électronique (20) compare l'intensité lumineuse enregistrée par les photos cellules (6 et 8) et éclaire la diode (22) représentant le point haut.
- suivant les possibilités, relever le point bas de la règle ou baisser le point haut progressivement ; lorsque le niveau est atteint, l'intensité lumineuse enregistrée par les photos cellules électriques (6 et 8) s'égalise ; le comparateur (20)
   * éteint la diode (22) représentant le point haut
   * coupe le buzzer

VARIANTE
   a) Utilisation du dispositif pour maintien à un niveau déterminé de produit liquide

   - une cellule (19) est positionnée au niveau de référence
   - l'autre est fixée à un flotteur. Lors de la variation du niveau, le comparateur commande une pompe en apport ou en vidage suivant le cas.
   b) Evolution de niveaux dans plusieurs récipients de façon homogène (vidage ou remplissage)
   - une cellule (19) est posée sur un flotteur dans chaque récipient
   - le comparateur (20) sera simple si deux cuves, multipoints au-delà
   - le fonctionnement est le même que ci-dessus.
   c) Calage automatique d'un équipement, d'une machine, d'un véhicule, etc
   - Le dispositif sera
      * intégré, si le contrôle est permanent
      * amovible, si le calage est à faire une fois.
   - Le nombre de cellules (19) est fonction du nombre de points de référence et le comparateur (20) est conçu en rapport.
   - Le principe reste le même, le comparateur actionnant des vérins pour le calage de niveau.
   d) Calage à faux-niveau déterminé
   - même principe, la dénivellation est déterminée et fait l'objet d'une cale ou d'une pige en conséquence sous une cellule (19).
   e) Toute autre utilisation avec référence l'horizontale
   Le dispositif selon l'invention est particulièrement destiné au calage, au tracé, au contrôle de niveau ou à faux niveau de solides, de liquides et concerne toutes les natures d'activité.

REFERENCES

   1.  corps bas
   2.  orifice
   3.  corps haut
   4.  vis de fixation et de serrage
   5.  membrane
   6.  photo cellule électrique
   7.  index
   8.  photo cellule électique
   9.  renforcement solidaire de l'index
   10. partie fine et souple
   11. bord renforcé
   12. conduit
   13. liquide
   14. chambre intérieure
   15. trous
   16. cannelure
   17. orifice
   18. guide de l'index
   19. cellules
   20. comparateur électronique
   21. règle
   22. signalisation visuelle
   23. logement

Revendications

1. Dispositif pour caler, tracer, contrôler le niveau ou un faux-niveau déterminé, du type comportant au moins deux cellules (19) comportant chacune une chambre (14) reliées ensemble par un conduit rigide ou souple (12) le tout rempli de liquide (13) rendu prisonnier par deux membranes particulières souples (5) caractérisé par le fait

   que les deux membranes (5) sont surmontées chacune d'un index (7) et que chaque index (7) est associé à un détecteur d'intensité lumineuse (6, 8) pour analyser la position dudit index (7).

2. Dispositif selon la revendication 1 caractérisé par le fait

   que ledit dispositif est pourvu :
   - d'un comparateur électronique (20) des informations données par les détecteurs (6 et 8),

- d'une signalisation visuelle (22) et, éventuellement sonore de la position relative des chambres (14).

3. Dispositif selon la revendication 1 caractérisé par le fait

que chaque chambre (14) comporte, une membrane (5) et un guide (18) pour l'index (7), solidaire de ladite membrane (5).

4. Dispositif selon la revendication 3 caractérisé par le fait

que chaque membrane (5) est composée d'un bord renforcé (11) faisant joint, d'une partie fine et souple, d'un renforcement (9) solidaire de l'index (7).

5. Dispositif selon la revendication 4 caractérisé par le fait

que l'index (7) a une forme et des dimensions telles que l'air peut entrer et sortir librement de la voûte.

6. Dispositif selon la revendication 4 caractérisé par le fait

que le renforcement (9) de la membrane (5) prend appui sur l'évent de la chambre (14) pour résister aux pressions.

7. Dispositif selon la revendication 1 caractérisé par le fait

que l'une des cellules (19) comporte un orifice (17), pour laisser échapper l'air prisonnier.

FIGURE 1 = COUPE BB

FIGURE 2

FIGURE 3 = SECTION AA

FIGURE 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 379 367 (MARCEL LEGRIS)<br>* Abrégé; colonne 4, lignes 10-61; figures 1,2 *<br>--- | 1-3 | G 01 C 5/04 |
| A | FR-A-2 622 690 (MARCEL LEGRIS)<br>* Abrégé; revendication 1 *<br>--- | 1-3 | |
| A | FR-A-2 280 881 (J. ROMAN)<br>* Document entier *<br>----- | 1 | |

**DOMAINES TECHNIQUES RECHERCHES (Int. Cl.5)**

G 01 C

Le présent rapport a été établi pour toutes les revendications

| Lieu de la recherche | Date d'achèvement de la recherche | Examinateur |
|---|---|---|
| LA HAYE | 15-02-1991 | HUNT J.H. |